# EUROPEAN PATENT SPECIFICATION

(11) **EP 1 780 396 B1**
(45) Date of publication and mention of the grant of the patent: **29.07.2009**
(21) Application number: 06021675.1
(22) Date of filing: 16.10.2006
(51) Int. Cl.: F02M 21/02

(54) **Gas injection system for internal combustion spark ignition engines**
Gaseinspritzsystem für funkgezündeten Brennkraftmaschinen
Système d'injection de gaz pour moteurs à combustion interne à allumage par étincelle

(30) Priority: 28.10.2005 IT PI20050119
(43) Date of publication of application: 02.05.2007
(73) Proprietor: DELL'ORTO S.P.A., 20038 Seregno (Milano) (IT)
(72) Inventor: Dell'orto, Pierluigi, 20038 Seregno (MI) (IT)
(74) Representative: Celestino, Marco

(56) References cited:
- WO-A-98/08014
- US-A- 5 752 489
- US-A1- 2002 195 088

## Description

### Field of the invention

The present invention relates to a system for injecting gaseous fuel directly in the combustion chamber of a spark ignition engine. In particular, this system can be used in engines for motorcycles, and is in particular, adapted to two-stroke engines.

### Description of the prior art

Engines are known equipped with the so-called direct fuel injection systems, which use specially developed injectors protruding directly in a combustion chamber and adapted to resist at high pressure and high temperature conditions.

With respect to indirect injection, where the injectors are not subject to the aggressive conditions of combustion chambers, the direct injection has the advantages of les environmental pollution by fuel unburnt and a better combustion efficiency.

Direct injectors exist both for petrol and for gas, both for two-stroke and four stroke engines. In both cases, they are expensive and specifically developed components, adapted to be exposed directly in a combustion chamber.

Systems exist for direct injection of petrol, so-called "air assisted" injection, which provide a prechamber insulated from the combustion environment and in which the compressed air is carburetted. Then the actual injection in the combustion chamber is carried out, by an electrovalve that leaves the mixture to flow from the prechamber into the combustion chamber as disclosed in WO-98/08014. These systems require, therefore, in addition to a simple component, i.e. an injecting device for indirect injection, also a further electrovalve and a air compressor that can be an electric compressor or a reciprocating compressor powered by the engine.

### Summary of the invention

It is a feature of the invention to provide a direct gas injection system for internal combustion spark ignited engines that uses an injecting device that is extremely easy and not expensive and not require other auxiliary devices.

It is also a feature of the invention to provide a direct gas injection system, for internal combustion spark ignited engines, which is installed both on new engines and as retrofit on existing engines.

According to the present invention, an injecting device is provided adapted to be located in the head of a internal combustion spark ignited engine, the injecting device having a wall that faces in the combustion chamber, the injecting device comprising
- an electrovalve portion located opposite to the wall,
- a passive valve arranged at the wall, and
- a chamber arranged between the electrovalve portion and the passive valve,

Said electrovalve can be supplied by pressurized gas and can be such that it can be opened by electric control means, at opening the electrovalve the pressurized gas entering the chamber and causing the wall to move and the gas to enter the combustion chamber owing to the automatic opening of the passive valve.

In a first exemplary embodiment, the passive valve, the chamber and the electrovalve are integrated in a single element having a hollow portion defining the chamber.

In a second exemplary embodiment, the passive valve and the chamber are integrated in a hollow element, having a mouth opposite to the wall, in the mouth an end of the electrovalve being engaged.

In this second exemplary embodiment, the electrovalve portion is an injecting device for indirect injection of methane of a type available on the market. In this case, there is the advantage that the electrovalve is not directly exposed to the conditions of pressure and combustion owing to the presence of the passive valve and of the chamber.

Advantageously, the passive valve comprises at least one opening made in the wall, and a blocking element suitable to cover the opening in the wall and arranged on the side of the combustion chamber, the blocking element being kept pressed by resilient means against the wall in order to stop the opening and and detaching from the wall under the effect of the pressure of gas delivered in the chamber in order to oppose to the resilient means, whereby the gas can cross the opening and enter the combustion chamber.

In a first exemplary structure, the blocking element is at least one plate having a stem that crosses the wall and ends with an enlarged portion, the plate being kept pressed against the wall by a spring arranged in the chamber about the stem and that faces the enlarged portion.

In a second exemplary structure, the blocking element is at least one resilient plate connected to the wall in at least one point in order to cover the opening, the plate being adapted to bend under the action of the pressure of the gas leaving the opening free.

Then, according to the present invention, the gas is injected by an injecting device that associates a simple gas distributing part, i.e. the electrovalve, to another simple part, the wall that can be crossed by the gas for the presence of the passive valve, and the chamber that is arranged between the wall and the electrovalve for shielding the latter from the combustion environment.

In substance, the electrovalve, which can be of the type with electric drive and electronic control, is capable of injecting a desired amount of gas in the chamber, leaving it with a minimum delay to enter the combustion chamber, against the action of a mechanical contrast system, the passive valve.

According to another aspect of the invention, a gas injection system for internal combustion spark ignited engines comprises a pressurized gas container; a pressure reducer ; an injecting device for injecting gas directly in the combustion chamber of the engine, and has the feature that the injecting device provides:
- an electrovalve portion opposite to a wall,
- a passive valve arranged at the wall, and
- a chamber arranged between the electrovalve portion and the passive valve,
the electrovalve being supplied by pressurized gas and being such that it can be opened quickly so that the pressurized gas enters the chamber and causes the passive valve to open and the gas to enter the combustion chamber.

Owing to the invention a compressor is not needed, like instead it is present in known air-assisted petrol injection systems. The gaseous nature aeriforme of the fuel, owing to its high specific volume, allows the use of an automatic valve for conveying the gas into the combustion chamber. Therefore the proposed system is much easier than the systems for air assiste injection owing to the absence of the compressor. Furthermore, it provides an direct injection using a simplified fuel distributor, since it does not need to be exposed to the combustion environment.

### Brief description of the drawings

The invention will be now shown with the following description of an exemplary embodiment thereof, exemplifying but not limitative, with reference to the attached drawings wherein:
- figure 1 shows a diagrammatical view of a gas injection system according to the invention mounted on a two-stroke engine;
- figures 2 and 3 show a first exemplary embodiment of an injecting device according to the invention in two different operative positions;
- figure 4 is a cross sectional view of the device according to arrows A-A of figures 2 and 3;
- figure 5 shows a qualitative time diagram of a single opening cycle of the the electrovalve and of the passive valve;
- figures 6 and 7 show an exemplary structure of the first exemplary embodiment of the injecting device with a different plate passive valve;
- figure 8 shows a second exemplary embodiment of the injecting device with the use of an gas distributing electrovalve of a type available on the market.

### Description of the preferred embodiments

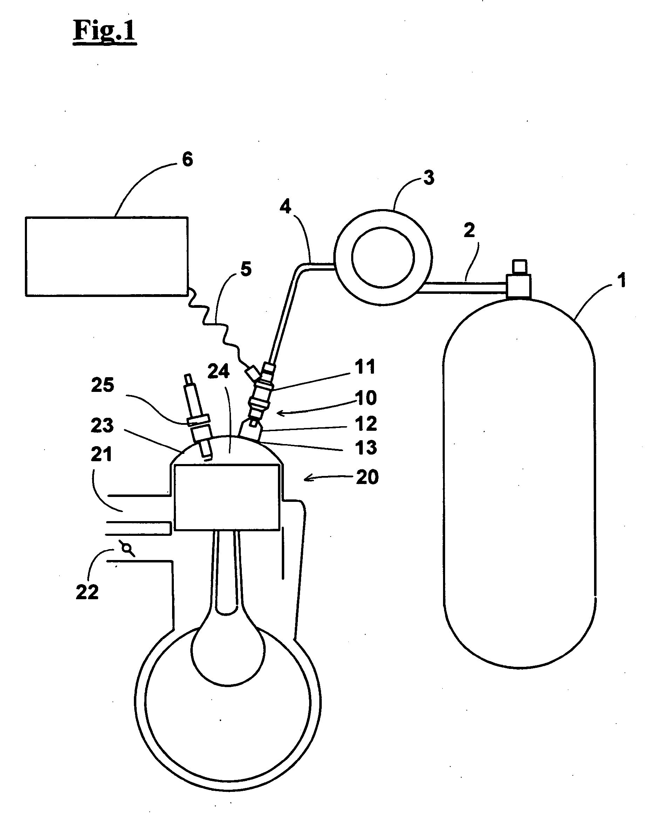

With reference to figure 1, a gas injection system provides an injecting device 10 mounted on a two stoke engine 20. The latter, in an exemplary way, comprises a discharge duct 21 and a fresh air inlect duct 22 in a combustion chamber 23 enclosed by a head 24, and a spark plug 25.

The injection system comprises a reservoir 1 for storing the gas, fed to the injecting device 10 by means of ducts 2 and 4, between which a pressure reducer 3 is arranged. Furthermore, the injecting device 10 is fed through a cable 5 by an electronic control unit 6 that operates in a known way.

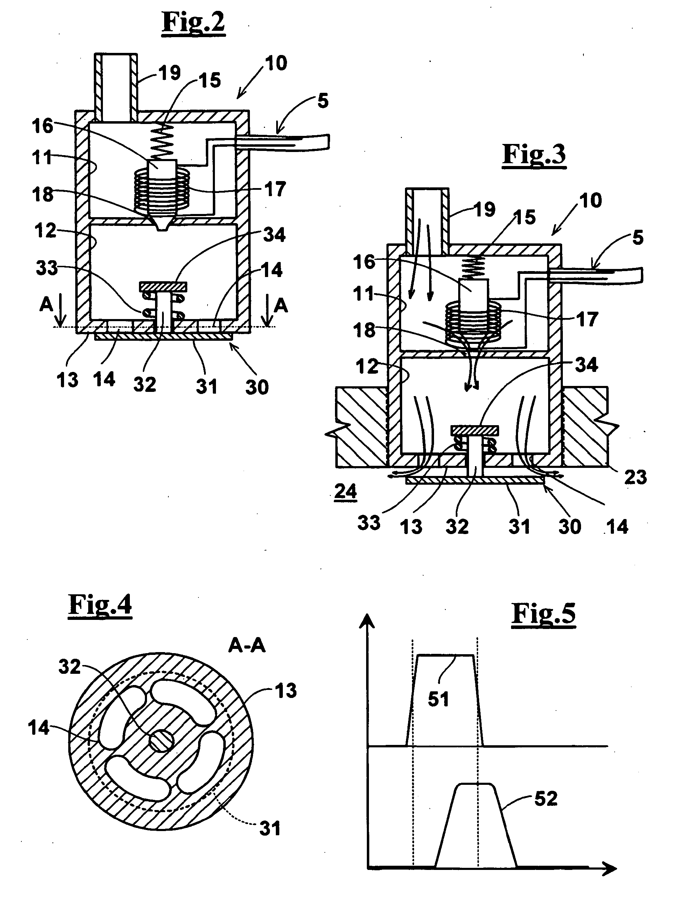

According to the invention, the injecting device 10 comprises an electrovalve 11 for distributing the gas and a wall 13 that faces combustion chamber 24. A chamber 12 is provided that is arranged between electrovalve 11 and wall 13. Wall 13 is such that it can be opened automatically for causing the gas to enter combustion chamber 24. In particular, at wall 13 a automatic valve of passive type is arranged described in more detail hereinafter (indicated as 30 or 40 respectively in figures 2,8 or 6).

Electrovalve 11 is supplied by pressurized gas and is such that it can be opened by electric control means 5 and 6. At opening electrovalve 11 the pressurized gas enters chamber and causes instantly the automatic opening of wall 13 and the subsequent inlet of gas in the combustion chamber.

In the system according to the invention, in other words, the high specific volume and the pressure are exploited of the fuel injected in chamber 12 as power to enter the combustion chamber 23, allowing it to cross wall 13.

With reference to figures from 2 to 4, a first exemplary embodiment of the invention provides an injecting device 10 having a wall 13 that in use faces combustion chamber 24 of figure 4. The injecting device 10 comprises an electrovalve portion 11 located opposite with respect to combustion chamber 24 and a passive valve 30 arranged at wall 13. Between electrovalve portion 11 and passive valve 30 a chamber 12 is present. Electrovalve portion 11 is supplied by pressurized gas coming from a fitting 19, connected to duct 4 of figure 1. In electrovalve portion 11 a needle stopper 16 is housed that opens/closes a hole 18 for causing the pressurized gas to enter chamber 13. Stopper 16 is pushed by a spring 15 against the hole 18 and is such that it can be opened by a solenoid electric control 17 fed through the electric cable 5 by control unit 6 of figure 1. As well known, solenoid 17 crossed by current creates a push biased by spring 15 and pushing stopper 16 to an open position.

As shown in figure 3, at opening stopper 16 of electrovalve portion 11 the pressurized gas enters chamber 12 and causes the wall to move 13 and the gas to enter combustion chamber 24 owing to the automatic opening of passive valve 30.

More precisely, passive valve 30 comprises a blocking element 31 suitable to cover apertures 14 made in wall 13, shown in a cross sectional view in figure 4. Blocking element 31 coats the outer face of the wall 31 i.e. arranged on the side of the combustion chamber. Blocking element 31 is biased by a spring 33 in order to stop apertures 14.

In the case of figures 2 and 3, blocking element 31 has the shape of a plate having a stem 32 that crosses wall 13 and ends with an enlarged portion 34. The plate is kept pressed against the wall by spring 33 that is arranged about the stem and that faces enlarged portion 34. The external position of the blocking element is advantageous, because the pressure present in combustion chamber 24, during the combustion, keeps wall 13 pressed, avoiding that the flames reach chamber 12 through apertures 14. For improving the isolation, it is possible to give the blocking element also a mushroom shape instead of a plate, with subsequent conical shape of wall 13.

As shown in figure 3, by operating solenoid 17 stopper 16 moves up allowing the pressurized gas to exit suddenly, as shown by the arrows. The position of spring 33 allows plate 31 to detach from wall 13 under the effect of the pressure of the gas delivered suddenly in chamber 12, against the action of spring 33. This way, the gas can cross apertures 14, as shown by the arrows, and enters the combustion chamber.

The motion of stopper 16 and of plate 31 are qualitatively indicated in figure 5. It is clear from the figure that the two motions 51 and 52, respectively of the plate and of stopper 16, are substantially simultaneous, with a light delay of plate 31 with respect to stopper 16. Being the cycle 51 of moving stopper 16 about of a millisecond, the delay of opening cycle 52 dor moving plate 31 is sensibly less than this magnitude, whereby the opening plate 31 substantially follows the motion of stopper 16, with a minimum and fixed delay. This way, there is a direct control of the supply of gas in the combustion chamber notwithstanding the presence of a double valve.

The height of chamber 12 is minimum possible keeping in mind that the closer hole 18 is to valve 30, the quicker is the response of plate 31 and then the lower is the delay shown in figure 5. On the other hand, an suitable height of chamber 12 gives a measurement of the protection given to electrovalve portion 11 with respect to the heat developed in the combustion chamber 23, which would damage the electrovalve. A good compromise between these two extremes is to set a suitable height of chamber 12. For example, this height can be about 2-10 mm. In particular, chamber 12 provides a gas barrier that is arranged between wall 13, which is at high temperature, and electrovalve portion 11. Furthermore, the heat produced by the high temperature of wall 13 in chamber 12 does not accumulate, owing to the continuous supply of fresh gas, and the heat that can be transmitted for conductivity is dissipated through the cooling system of head 23 of the engine.

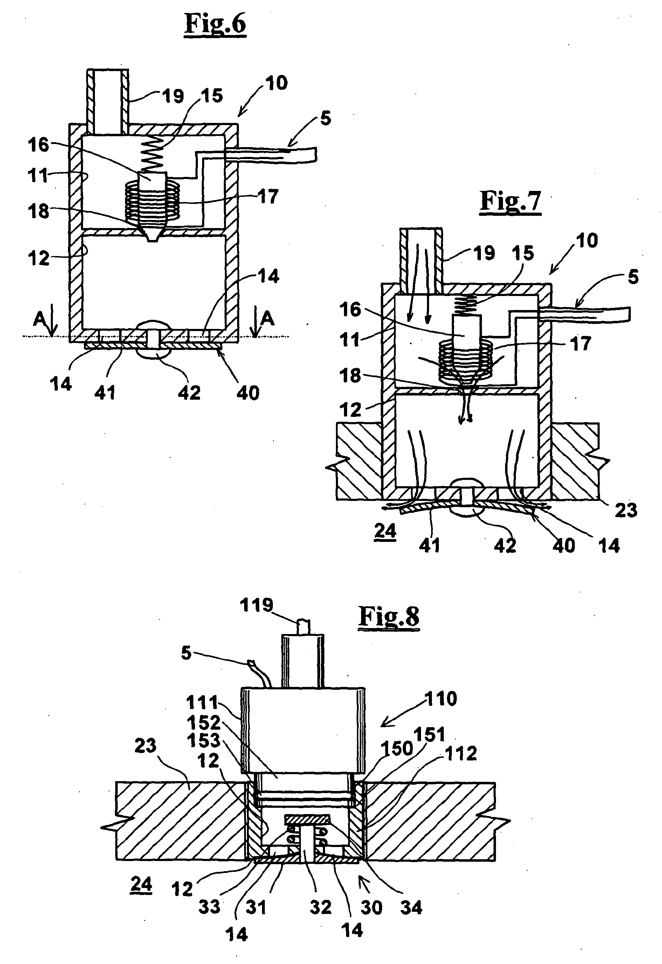

In a second exemplary structure, shown in figures 6 and 7, a diagrammatical view is provided of injecting device 10 of figures 2 and 3, with a different passive valve 40. In this valve the blocking element consists of a resilient plate 41 connected to wall 13 in at least one point 42, in order to cover apertures 14. As shown in figure 7, the plate 41 is adapted to bend under the action of the pressure of the gas, leaving apertures 14 free and allowing the flow of the gas towards the combustion chamber as indicated by the arrows. In addition to the case of a single plate, more plates can be provided, one for each opening 14.

In the exemplary embodiments described in figures 2 and 6 passive valve 30 or 40, chamber 12 and electrovalve 11 are integrated in a single element.

Alternatively, in a second exemplary embodiment, shown in figure 8, wall 13 and chamber 12 are integrated in a hollow element 112, having a mouth 150 opposite to wall 13, in which an end 152 engages of electrovalve 111.

In this exemplary embodiment, electrovalve 111 is an injecting device for indirect injection of gas of a type available on the market. In this case, there is the advantage that this electrovalve 111 is not directly exposed to the conditions of pressure and temperature present in combustion chamber 24 owing to the presence of the chamber and of the passive valve.

In more detail, the hollow element 112 houses head 23 like in the previous case, for example screwed or by a fixed joint. Its mouth 150 has a shoulder 151 against which the end 152 of electrovalve 111 abuts. The latter is not described in detail since of commercial type, and has an inner quick response solenoid and a stopper capable of releasing an amount of pressurized gas in quick time from feeding chamber 12. In a similar way, as described above, the gas entering chamber 12 opens automatically passive valve 30 and enters, with minimum delay, the combustion chamber. Valve 30, during the combustion, is sealed owing to the mushroom shape of plate 31 and to the corresponding substantially conical shape of wall 13, without reducing the quick response capacity of the valve same.

Then, according to the present invention, the gas is injected by an injecting device that combines a simple gas distributing part, i.e. the electrovalve, to a correspondingly easy part, i.e. the wall that can be crossed by the gas for the presence of the passive valve, and the chamber that is arranged between the wall and the electrovalve for shielding the latter from the combustion environment.

## Claims

1. An injecting device adapted to be located in the head of an internal combustion spark ignited engine, **characterised in that**, said injecting device having a wall (13) that faces the combustion chamber and comprising:
- an electrovalve (11) portion located opposite to said wall,
- a passive valve (30) arranged at said wall, and
- a chamber (12) arranged between said electrovalve portion and said passive valve,
said electrovalve being supplied by pressurized gas and being such that it can be opened by electric control means, at opening said electrovalve said pressurized gas entering said chamber and causing the movement of said wall and the subsequent inlet of said gas in said combustion chamber owing to the automatic opening of said passive valve.

2. Injecting device, according to claim 1, wherein said passive valve, said chamber and said electrovalve are integrated in a single element having a hollow portion defining said chamber.

3. Injecting device, according to claim 1, wherein said passive valve and said chamber are integrated in a hollow element, having a mouth opposite to said wall, in said mouth an end of said electrovalve being engaged.

4. Injecting device, according to claim 3, wherein said electrovalve is an injecting device for indirect injection of methane of a type available on the market.

5. Injecting device, according to claim 1, wherein said passive valve comprises at least one opening made in said wall, and a blocking element suitable to cover said opening on said wall and arranged on the side of said combustion chamber, said blocking element being kept pressed by resilient means against said wall in order to stop said opening and detaching from said wall under the effect of the pressure of gas delivered into said chamber in order to oppose to said resilient means, whereby said gas can cross said opening and enter said combustion chamber.

6. Injecting device, according to claim 5, wherein said blocking element is at least one plate having a stem that crosses said wall and ends with an enlarged portion, said plate being kept pressed against said wall by a spring arranged in said chamber about said stem and that faces said enlarged portion.

7. Injecting device, according to claim 5, wherein said blocking element is at least one resilient plate connected to said wall in at least one point in order to cover said opening, said plate being adapted to bend under the action of the pressure of the gas leaving free said opening.

8. A gas injection system for internal combustion spark ignited engines comprising a pressurized gas container; a pressure reducer; an injecting device for injecting gas directly in the combustion chamber of the engine, **characterised in that** said injecting device provides:
- an electrovalve portion opposite to said wall,
- a passive valve arranged at said wall, and
- a chamber arranged between said electrovalve portion and said passive valve,
sSaid electrovalve portion being supplied by pressurized gas and being such that it can be opened by electric control means so that at opening said electrovalve the pressurized gas enters the chamber and causes the automatic opening of the passive valve, letting the gas enter the combustion chamber.

## Patentansprüche

1. Einspritzvorrichtung, die dafür vorgesehen ist, im Kopf eines Ottomotors angeordnet zu werden, **dadurch gekennzeichnet, dass** die Einspritzvorrichtung eine Wand (13) aufweist, die dem Brennraum zugewandt ist, und Folgendes umfasst:
- einen Elektroventilabschnitt (11), welcher der Wand gegenüberliegend angeordnet ist,
- ein passives Ventil (30), das an der Wand angeordnet ist, und
- eine Kammer (12), die zwischen dem Elektroventilabschnitt und dem passiven Ventil angeordnet ist,
wobei das Elektroventil mit druckbeaufschlagtem Gas beschickt wird und so ausgeführt ist, dass es mit Hilfe eines elektrischen Steuerungsmittels geöffnet werden kann, wobei beim Öffnen des Elektroventils das druckbeaufschlagte Gas in die Kammer einströmt und eine Bewegung der Wand und das anschließende Einströmen des Gases in den Brennraum aufgrund des automatischen Öffnens des passiven Ventils verursacht.

2. Einspritzvorrichtung nach Anspruch 1, wobei das passive Ventil, die Kammer und das Elektroventil in einem einzigen Element integriert sind, das einen hohlen Bereich aufweist, der die Kammer definiert.

3. Einspritzvorrichtung nach Anspruch 1, wobei das passive Ventil und die Kammer in einem hohlen Element integriert sind, das eine Mündung gegenüber der Wand aufweist, wobei ein Ende des Elektroventils in die Mündung eingreift.

4. Einspritzvorrichtung nach Anspruch 3, wobei das Elektroventil eine Einspritzvorrichtung für die indirekte Einspritzung von Methan eines marktüblichen Typs ist.

5. Einspritzvorrichtung nach Anspruch 1, wobei das passive Ventil mindestens eine in der Wand ausgebildete Öffnung und ein Blockierelement, das für das Abdecken der Öffnung in der Wand geeignet und auf der Seite des Brennraums angeordnet ist, umfasst, wobei das Blockierelement durch ein elastisches Mittel gegen die Wand gedrückt gehalten wird, um die Öffnung zu verschließen, und unter der Wirkung des Drucks von in die Kammer einströmendem Gas entgegen der Kraft des elastischen Mittels von der Wand gelöst wird, wodurch das Gas durch die Öffnung hindurch und in den Brennraum hinein strömen kann.

6. Einspritzvorrichtung nach Anspruch 5, wobei das Blockierelement mindestens eine einzelne Platte ist, die einen Schaft aufweist, der sich durch die Wand hindurch erstreckt und in einen vergrößerten Abschnitt mündet, wobei die Platte durch eine Feder, die in der Kammer um den Schaft herum angeordnet und dem vergrößerten Abschnitt zugewandt ist, gegen die Wand gedrückt gehalten wird.

7. Einspritzvorrichtung nach Anspruch 5, wobei das Blockierelement mindestens eine einzelne elastische Platte ist, die an mindestens einem Punkt mit der Wand verbunden ist, um die Öffnung abzudecken, wobei die Platte dafür geeignet ist, sich unter der Wirkung des Drucks des Gases durchzubiegen, wodurch die Öffnung frei gelassen wird.

8. Gaseinspritzsystem für Ottomotoren mit einem Druckgasbehälter, einem Druckminderer und einer Einspritzvorrichtung zum Einspritzen von Gas direkt in den Brennraum des Motors, **dadurch gekennzeichnet, dass** die Einspritzvorrichtung Folgendes enthält:
- einen Elektroventilabschnitt, welcher der Wand gegenüberliegend angeordnet ist,
- ein passives Ventil, das an der Wand angeordnet ist, und
- eine Kammer, die zwischen dem Elektroventilabschnitt und dem passiven Ventil angeordnet ist,
wobei der Elektroventilabschnitt mit druckbeaufschlagtem Gas beschickt wird und so ausgeführt ist, dass er mit Hilfe eines elektrischen Steuerungsmittels geöffnet werden kann, so dass beim Öffnen des Elektroventils das druckbeaufschlagte Gas in die Kammer einströmt und das automatische Öffnen des passiven Ventils verursacht, wodurch das Gas in den Brennraum einströmen kann.

## Revendications

1. Dispositif d'injection adapté pour être positionné dans la tête d'un moteur à combustion interne allumé par étincelle, **caractérisé en ce que** ledit dispositif d'injection a une paroi (13) qui fait face à la chambre de combustion et comprenant :
- une partie d'électrovalve (11) positionnée à l'opposé de ladite paroi,
- une soupape passive (30) agencée au niveau de ladite paroi, et
- une chambre (12) agencée entre ladite partie d'électrovalve et ladite soupape passive,
ladite électrovalve étant alimentée par du gaz sous pression et étant telle qu'elle peut être ouverte par des moyens de commande électrique, à l'ouverture de ladite électrovalve, ledit gaz sous pression pénètre dans ladite chambre et provoque le déplacement de ladite paroi et l'entrée successive dudit gaz dans ladite chambre de combustion en raison de l'ouverture automatique de ladite soupape passive.

2. Dispositif d'injection selon la revendication 1, dans lequel ladite soupape passive, ladite chambre et ladite électrovalve sont intégrées dans un seul élément ayant une partie creuse définissant ladite chambre.

3. Dispositif d'injection selon la revendication 1, dans lequel ladite soupape passive et ladite chambre sont intégrées dans un élément creux, ayant une embouchure opposée à ladite paroi, dans ladite embouchure, une extrémité de ladite électrovalve est mise en prise.

4. Dispositif d'injection selon la revendication 3, dans lequel ladite électrovalve est un dispositif d'injection pour l'injection indirecte du méthane d'un type distribué sur le marché.

5. Dispositif d'injection selon la revendication 1, dans lequel ladite soupape passive comprend au moins une ouverture réalisée dans ladite paroi, et un élément de blocage approprié pour recouvrir ladite ouverture sur ladite paroi et agencé sur le côté de ladite chambre de combustion, ledit élément de blocage étant maintenu comprimé par des moyens élastiques contre ladite paroi afin d'arrêter ladite ouverture et le détachement de ladite paroi sous l'effet de la pression du gaz délivré dans ladite chambre afin de s'opposer auxdits moyens élastiques, moyennant quoi ledit gaz peut traverser ladite ouverture et entrer dans ladite chambre de combustion.

6. Dispositif d'injection selon la revendication 5, dans lequel ledit élément de blocage est au moins une plaque ayant une tige qui traverse ladite paroi et se termine par une partie élargie, ladite plaque étant maintenue comprimée contre ladite paroi par un ressort agencé dans ladite chambre autour de ladite tige et qui fait face à ladite partie élargie.

7. Dispositif d'injection selon la revendication 5, dans lequel ledit élément de blocage est au moins une plaque élastique raccordée à ladite paroi en au moins un point afin de recouvrir ladite ouverture, ladite plaque étant adaptée pour fléchir sous l'action de la pression du gaz libérant ladite ouverture.

8. Système d'injection de gaz pour des moteurs à combustion interne allumés par étincelle, comprenant un récipient de gaz sous pression ; un réducteur de pression ; un dispositif d'injection pour injecter du gaz directement dans la chambre de combustion du moteur, **caractérisé en ce que** ledit dispositif d'injection comprend :
- une partie d'électrovalve opposée à ladite paroi,
- une soupape passive agencée au niveau de ladite paroi, et
- une chambre agencée entre ladite partie d'électrovalve et ladite soupape passive,
ladite partie d'électrovalve étant alimentée par du gaz sous pression et étant telle qu'elle peut être ouverte par des moyens de commande électrique de sorte qu'à l'ouverture de ladite électrovalve, le gaz sous pression pénètre dans la chambre et provoque l'ouverture automatique de la soupape passive, laissant le gaz entrer dans la chambre de combustion.
